# EUROPÄISCHE PATENTSCHRIFT

(11) **EP 1 099 042 B1**
(45) Veröffentlichungstag und Bekanntmachung des Hinweises auf die Patenterteilung: **03.12.2003**
(21) Anmeldenummer: 99945942.3
(22) Anmeldetag: 08.07.1999
(51) Int. Cl.: F01K 23/06, F02C 3/28

(54) **GAS- UND DAMPFTURBINENANLAGE**
GAS AND STEAM TURBINE INSTALLATION
INSTALLATION A TURBINE A GAZ ET A VAPEUR

(30) Priorität: 17.07.1998 DE 19832293
(43) Veröffentlichungstag der Anmeldung: 16.05.2001
(73) Patentinhaber: SIEMENS AKTIENGESELLSCHAFT, 80333 München (DE)
(72) Erfinder: SCHIFFERS, Ulrich, D-90542 Eckental (DE); HANNEMANN, Frank, D-91080 Spardorf (DE)
(86) Internationale Anmeldenummer: DE9902106
(87) Internationale Veröffentlichungsnummer: WO00004279

(56) Entgegenhaltungen:
- EP-A- 0 413 199
- DE-C- 4 107 109
- HAUPT G: "EFFIZIENTE UND UMWELTFREUNDLICHE STROMERZEUGUNG IM GUD-KRAFTWERK MIT INTEGRIERTER VERGASUNG" ELEKTROTECHNIK UND INFORMATIONSTECHNIK,AT,SPRINGER VERLAG, WIEN, Bd. 113, Nr. 2, Seite 102-108 XP000555695 ISSN: 0932-383X
- PRUSCHEK R ET AL: "THERMODYNAMISCHE ANALYSE VON KOMBI-PROZESSEN MIT INTEGRIERTER KOHLEVERGASUNG UND CO2-RUECKHALTUNG" VGB KRAFTWERKSTECHNIK,DE,VGB KRAFTWERKSTECHNIK GMBH. ESSEN, Bd. 73, Nr. 7, Seite 577-584 XP000382747 ISSN: 0372-5715

## Beschreibung

Die Erfindung betrifft eine Gas- und Dampfturbinenanlage mit einem einer Gasturbine rauchgasseitig nachgeschalteten Abhitzedampferzeuger, dessen Heizflächen in den Wasser-Dampf-Kreislauf einer Dampfturbine geschaltet sind, und mit einer der Brennkammer der Gasturbine über eine Brennstoffleitung vorgeschalteten Vergasungseinrichtung für Brennstoff.

Eine Gas- und Dampfturbinenanlage mit integrierter Vergasung von fossilem Brennstoff umfaßt üblicherweise eine Vergasungseinrichtung für den Brennstoff, die ausgangsseitig über eine Anzahl von zur Gasreinigung vorgesehenen Komponenten mit der Brennkammer der Gasturbine verbunden ist. Der Gasturbine kann dabei rauchgasseitig ein Abhitzedampferzeuger nachgeschaltet sein, dessen Heizflächen in den Wasser-Dampf-Kreislauf der Dampfturbine geschaltet sind. Eine derartige Anlage ist beispielsweise aus der GB-A 2 234 984 bekannt.

Weiterhin ist aus der DE 33 31 152 ein Verfahren zum Betrieb einer mit einer Brennstoffvergasungsanlage kombinierten Gasturbinenanlage bekannt. Hierbei ist es vorgesehen, dem Brenngas unmittelbar vor der Brennkammer Stickstoff zuzuführen.

Zur Reduktion des Schadstoffausstoßes bei der Verbrennung des vergasten fossilen Brennstoffs ist bei dieser Anlage in die Brennstoffleitung zwischen die Vergasungseinrichtung und die Brennkammer der Gasturbine ein Sättiger geschaltet, in dem der vergaste Brennstoff mit Wasserdampf beladen wird. Dazu durchströmt der vergaste Brennstoff den Sättiger im Gegenstrom zu einem Wasserstrom, der in einem als Sättigerkreislauf bezeichneten Wasserkreislauf geführt ist. Für einen besonders hohen Wirkungsgrad ist dabei eine Einkopplung von Wärme aus dem Wasser-Dampf-Kreislauf in den Sättigerkreislauf vorgesehen.

Durch den Kontakt mit dem im Sättigerkreislauf geführten aufgeheizten Wasserstrom im Sättiger wird der vergaste Brennstoff mit Wasserdampf aufgesättigt und erfährt in begrenztem Umfang eine Aufheizung. Aus wärmetechnischen und auch aus betrieblichen Gründen kann dabei eine weitere Aufheizung des Brennstoffs vor dessen Zuführung in die Brennkammer der Gasturbine erforderlich sein.

In der Druckschrift Haupt G: "Effiziente und umweltfreundliche Stromerzeugung im GUD-Kraftwerk mit integrierter Vergasung" Elektrotechnik und Informationstechnik, AT, Springer Verlag, Wien, Bd. 113, Nr. 2, Seite 102-108 XP00555695 ISSN: 0932-383X ist eine Gas- und Dampfturbinenanlage offenbart, wobei einer Gasturbine ein Abhitzedampferzeuger rauchgasseitig nachgeschaltet ist, dessen Heizflächen in den Wasser-Dampf-Kreislauf einer Dampfturbine geschaltet sind. Bei genannter Anlage ist der Brennkammer der Gasturbine über eine Brennstoffeinleitung eine Vergasungseinrichtung für Brennstoff vorgeschaltet, wobei in die Brennstoffleitung zwischen der Vergasungseinrichtung und einem Sättiger eine Mischvorrichtung zur Zumischung von Stickstoff vorgesehen ist.

Aus der Druckschrift Pruschek R. et al.: "Thermodynamische Analyse von Kombi- Prozessen mit integrierter Kohlevergasung und CO₂-Rückhaltung" VGB Kraftwerkstechnik, DE, VGB Kraftwerkstechnik GmbH, Essen, Bd. 73, Nr. 7, Seite 577-584 XP000382747 ISSN: 0372-5715 ist ein Rohgas-Rohgas-Wärmetauscher bekannt, der primärseitig bzw. sekundärseitig in die Brennstoffleitung vor der Zumischung und beidseitig eines Sättigers geschaltet ist.

Der Erfindung liegt die Aufgabe zugrunde, eine Gas- und Dampfturbinenanlage der oben genannten Art anzugeben, die einen besonders hohen Anlagenwirkungsgrad aufweist.

Diese Aufgabe wird erfindungsgemäß gelöst, indem in die Brennstoffleitung zwischen der Vergasungseinrichtung und dem Sättiger zusätzlich zu einer Mischvorrichtung zur Zumischung von Stickstoff ein Wärmetauscher primärseitig geschaltet ist, der sekundärseitig zwischen dem Sättiger und der Brennkammer ebenfalls in die Brennstoffleitung geschaltet ist.

Die Zumischung von Stickstoff zu dem auch als Synthesegas bezeichneten vergasten fossilen Brennstoff ist bei einer derartigen Anlage zur Einhaltung besonders geringer NOx-Grenzwerte bei der Verbrennung des Synthesegases vorgesehen. Die zur Zumischung des Stickstoffs vorgesehene Mischvorrichtung ist brennstoffseitig vor dem Sättiger in die Brennstoffleitung geschaltet. Der Wärmetauscher ist dabei primärseitig vor Mischer und Sättiger und sekundärseitig nach dem Sättiger in die Brennstoffleitung geschaltet. Er überträgt somit Wärme aus dem dem Sättiger zuströmenden, auch als Rohgas bezeichneten Synthesegas in das vom Sättiger abströmende, auch als Mischgas bezeichnete Synthesegas. Der auch als Rohgas-Mischgas-Wärmetauscher bezeichnete Wärmetauscher bewirkt somit eine zumindest teilweise wärmeseitige Umführung des Sättigers, so daß durch die Aufheizung des Synthesegases durch das Rohgas die thermodynamischen Verluste des Gesamtprozesses besonders gering gehalten sind. Die brennstoffseitige Anordnung der Mischvorrichtung vor dem Sättiger gewährleistet dabei, daß der Rohgas-Mischgas-Wärmetauscher die Wärme aus dem Rohgas auf einen besonders großen Massenstrom überträgt. Durch eine derartige Anordnung ist somit ein besonders günstiger Wärmetausch erreichbar, da - unter der Randbedingung konstanter Endtemperatur - eine vergleichsweise hohe Wärmemenge auf das aus dem Sättiger abströmende Mischgas übertragen werden kann.

Für einen besonders hohen Anlagenwirkungsgrad ist in vorteilhafter Weiterbildung dem Rohgas-Mischgas-Wärmetauscher in der Brennstoffleitung vor dem Sättiger ein Rohgas-Abhitzedampferzeuger vorgeschaltet. Durch den Rohgas-Abhitzedampferzeuger ist eine aus Werkstoffgründen günstige Vorkühlung des in der Vergasungseinrichtung erzeugten Synthesegases oder Rohgases möglich. Hierbei ist die dem Rohgas entzogene Wärme in besonders günstiger Weise zur Dampferzeugung nutzbar. Bei einer zur Vergasung von Kohle als fossilem Brennstoff ausgebildeten Anlage kann dabei ein sogenannter Gasquench vorgesehen sein, bei dem dem Synthesegas vor dessen Eintritt in den Rohgas-Abhitzedampferzeuger sogenanntes Quenchgas zugeführt wird, das an einer Stelle zwischen dem Rohgas-Mischgas-Wärmetauscher und dem Sättiger aus der Brennstoffleitung abgezweigt wird. Bei einer derartigen Anordnung ist der Rohgasmassenstrom dem Mischgasmassenstrom etwa vergleichbar, so daß das Mischgas durch den Wärmetausch mit dem Rohgas bei üblichen Betriebsbedingungen auf Temperaturen von deutlich oberhalb von 300°C vorgewärmt werden kann.

Zweckmäßigerweise ist zwischen dem Sättiger und der Brennkammer ein weiterer Wärmetauscher sekundärseitig in die Brennstoffleitung geschaltet, der z. B. mit Mitteldruck-Speisewasser beheizt ist. Bei einer derartigen Anordnung ist auch bei nur begrenzter Abkühlung des Rohgases - beispielsweise aufgrund von durch eine Rohgas-Entstaubungsvorrichtung gesetzten Randbedingungen - eine zuverlässige Vorwärmung des Mischgases bei besonders hohem Anlagenwirkungsgrad gewährleistet. Ein derartiges Konzept zur Mischgasvorwärmung ist auch besonders geeignet für eine zur Vergasung von Kohle als fossilem Brennstoff ausgebildete Anlage, bei der kein Gasquench vorgesehen ist, oder für eine zur Vergasung von Öl als fossilem Brennstoff ausgebildete Anlage. Insbesondere bei einer für die Vergasung von Kohle ausgebildeten Anlage ohne Gasquench ist der Rohgasmassenstrom üblicherweise etwa halb so groß wie der Mischgasmassenstrom, so daß die Mischgasvorwärmung durch den Rohgas-Mischgas-Wärmetauscher auf einen Temperaturbereich von etwa 200°C bis 230°C begrenzt ist. Bei einer derartigen Anlage ist somit eine zusätzliche Mischgasvorwärmung uber einen beispielsweise mit Hochdruckspeisewasser beheizten weiteren Wärmetauscher besonders günstig.

Die mit der Erfindung erzielten Vorteile bestehen insbesondere darin, daß durch den zusätzlich zu der vor dem Sättiger in die Brennstoffleitung geschalteten Mischvorrichtung vorgesehenen Rohgas-Mischgas-Wärmetauscher ein besonders günstiger Wärmeübertrag von dem Sättiger zuströmendem Rohgas auf das aus dem Sättiger abströmende Mischgas unter Umgehung des Sättigers ermöglicht ist. Eine thermodynamisch ungünstige Abkühlung und Wiederaufheizung des Synthesegases ist somit nur in begrenztem Maße erforderlich, so daß der Wirkungsgrad der Gas- und Dampfturbinenanlage besonders hoch ist.

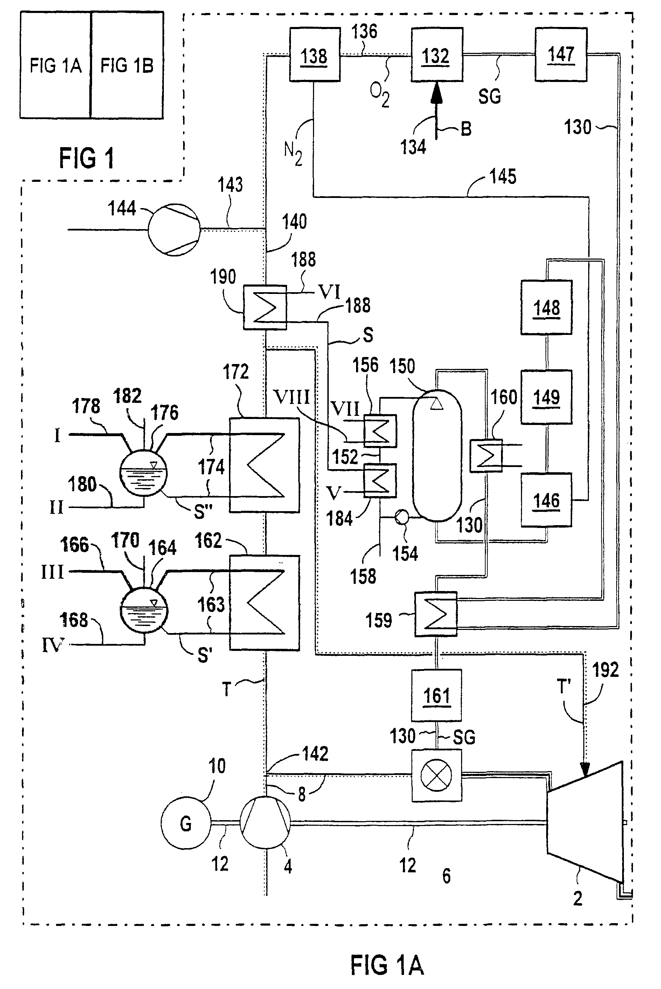

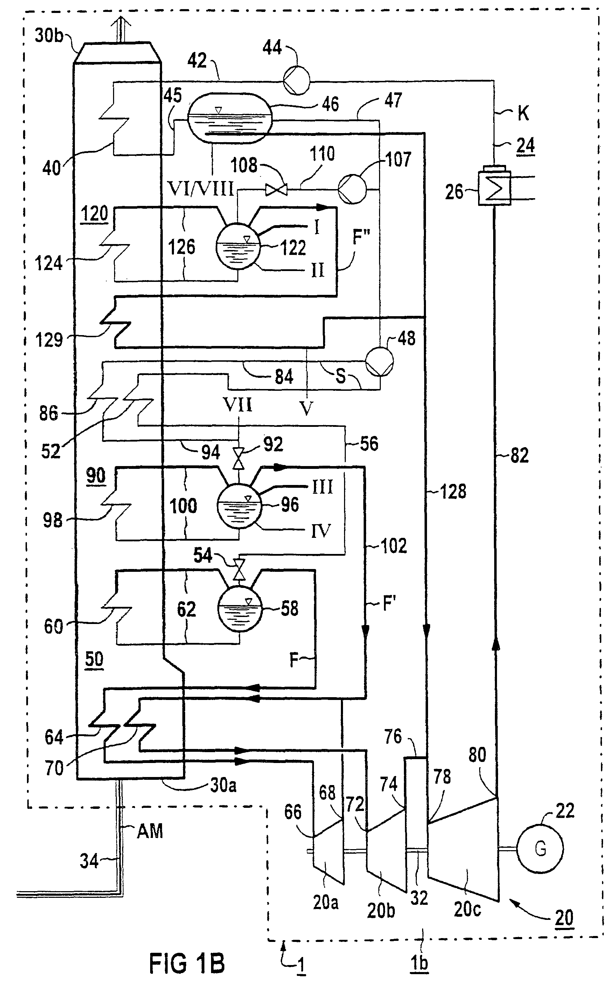

Ein Ausführungsbeispiel der Erfindung wird anhand einer Zeichnung näher erläutert. Darin zeigt die Figur schematisch eine Gas- und Dampfturbinenanlage.

Die Gas- und Dampfturbinenanlage 1 gemäß der Figur umfaßt eine Gasturbinenanlage 1a und eine Dampfturbinenanlage 1b. Die Gasturbinenanlage 1a umfaßt eine Gasturbine 2 mit angekoppeltem Luftverdichter 4 und eine der Gasturbine 2 vorgeschaltete Brennkammer 6, die an eine Druckluftleitung 8 des Verdichters 4 angeschlossen ist. Die Gasturbine 2 und der Luftverdichter 4 sowie ein Generator 10 sitzen auf einer gemeinsamen Welle 12.

Die Dampfturbinenanlage 1b umfaßt eine Dampfturbine 20 mit angekoppeltem Generator 22 und in einem Wasser-Dampf-Kreislauf 24 einen der Dampfturbine 20 nachgeschalteten Kondensator 26 sowie einen Abhitzedampferzeuger 30. Die Dampfturbine 20 besteht aus einer ersten Druckstufe oder einem Hochdruckteil 20a und einer zweiten Druckstufe oder einem Mitteldruckteil 20b sowie einer dritten Druckstufe oder einem Niederdruckteil 20c, die über eine gemeinsame Welle 32 den Generator 22 antreiben.

Zum Zuführen von in der Gasturbine 2 entspanntem Arbeitsmittel AM oder Rauchgas in den Abhitzedampferzeuger 30 ist eine Abgasleitung 34 an einen Eingang 30a des Abhitzedampferzeugers 30 angeschlossen. Das entspannte Arbeitsmittel AM aus der Gasturbine 2 verläßt den Abhitzedampferzeuger 30 über dessen Ausgang 30b in Richtung auf einen nicht näher dargestellten Kamin.

Der Abhitzedampferzeuger 30 umfaßt einen Kondensatvorwärmer 40, der eingangsseitig über eine Kondensatleitung 42, in die eine Kondensatpumpeneinheit 44 geschaltet ist, mit Kondensat K aus dem Kondensator 26 bespeisbar ist. Der Kondensatvorwärmer 40 ist ausgangsseitig über eine Leitung 45 an einen Speisewasserbehälter 46 angeschlossen. Zur bedarfsweisen Umführung des Kondensatvorwärmers 40 kann zudem die Kondensatleitung 42 über eine nicht dargestellte Umführungsleitung direkt mit dem Speisewasserbehälter 46 verbunden sein. Der Speisewasserbehälter 46 ist über eine Leitung 47 an eine Hochdruckspeisepumpe 48 mit Mitteldruckentnahme angeschlossen.

Die Hochdruckspeisepumpe 48 bringt das aus dem Speisewasserbehälter 46 abströmende Speisewasser S auf ein für eine dem Hochdruckteil der Dampfturbine 20 zugeordnete Hochdruckstufe 50 des Wasser-Dampf-Kreislaufs 24 geeignetes Druckniveau. Das unter hohem Druck stehende Speisewasser S ist der Hochdruckstufe 50 über einen Speisewasservorwärmer 52 zuführbar, der ausgangsseitig über eine mit einem Ventil 54 absperrbare Speisewasserleitung 56 an eine Hochdrucktrommel 58 angeschlossen ist. Die Hochdrucktrommel 58 ist mit einem im Abhitzedampferzeuger 30 angeordneten Hochdruckverdampfer 60 zur Bildung eines Wasser-Dampf-Umlaufs 62 verbunden. Zum Abführen von Frischdampf F ist die Hochdrucktrommel 58 an einen im Abhitzedampferzeuger 30 angeordneten Hochdrucküberhitzer 64 angeschlossen, der ausgangsseitig mit dem Dampfeinlaß 66 des Hochdruckteils 20a der Dampfturbine 20 verbunden ist.

Der Dampfauslaß 68 des Hochdruckteils 20a der Dampfturbine 20 ist über einen Zwischenüberhitzer 70 an den Dampfeinlaß 72 des Mitteldruckteils 20b der Dampfturbine 20 angeschlossen. Dessen Dampfauslaß 74 ist über eine Überströmleitung 76 mit dem Dampfeinlaß 78 des Niederdruckteil 20c der Dampfturbine 20 verbunden. Der Dampfauslaß 80 des Niederdruckteils 20c der Dampfturbine 20 ist über eine Dampfleitung 82 an den Kondensator 26 angeschlossen, so daß ein geschlossener Wasser-Dampf-Kreislauf 24 entsteht.

Von der Hochdruckspeisepumpe 48 zweigt zudem an einer Entnahmestelle, an der das Kondensat K einen mittleren Druck erreicht hat, eine Zweigleitung 84 ab. Diese ist über einen weiteren Speisewasservorwärmer 86 oder Mitteldruck-Economizer mit einer dem Mitteldruckteil 20b der Dampfturbine 20 zugeordneten Mitteldruckstufe 90 des Wasser-Dampf-Kreislaufs verbunden. Der zweite Speisewasservorwärmer 86 ist dazu ausgangsseitig über eine mit einem Ventil 92 absperrbare Speisewasserleitung 94 an eine Mitteldrucktrommel 96 der Mitteldruckstufe 90 angeschlossen. Die Mitteldrucktrommel 96 ist mit einer im Abhitzedampferzeuger 30 angeordneten, als Mitteldruckverdampfer ausgebildeten Heizfläche 98 zur Bildung eines Wasser-Dampf-Umlaufs 100 verbunden. Zum Abführen von Mitteldruck-Frischdampf F' ist die Mitteldrucktrommel 96 über eine Dampfleitung 102 an den Zwischenüberhitzer 70 und somit an den Dampfeinlaß 72 des Mitteldruckteils 20b der Dampfturbine 20 angeschlossen.

Von der Leitung 47 zweigt eine weitere, mit einer Niederdruckspeisepumpe 107 versehene und mit einem Ventil 108 absperrbare Leitung 110 ab, die an eine dem Niederdruckteil 20c der Dampfturbine 20 zugeordnete Niederdruckstufe 120 des Wasser-Dampf-Kreislaufs 24 angeschlossen ist. Die Niederdruckstufe 120 umfaßt eine Niederdrucktrommel 122, die mit einer im Abhitzedampferzeuger 30 angeordneten, als Niederdruckverdampfer ausgebildeten Heizfläche 124 zur Bildung eines Wasser-Dampf-Umlaufs 126 verbunden ist. Zum Abführen von Niederdruck-Frischdampf F " ist die Niederdrucktrommel 122 über eine Dampfleitung 128, in die ein Niederdrucküberhitzer 129 geschaltet ist, an die Überströmleitung 76 angeschlossen. Der Wasser-Dampf-Kreislauf 24 der Gas- und Dampfturbinenanlage 1 umfaßt im Ausführungsbeispiel somit drei Druckstufen 50, 90, 120. Alternativ können aber auch weniger, insbesondere zwei, Druckstufen vorgesehen sein.

Die Gasturbinenanlage 1a ist für den Betrieb mit einem vergasten Synthesegas SG, das durch die Vergasung eines fossilen Brennstoffs B erzeugt wird, ausgelegt. Als Synthesegas kann beispielsweise vergaste Kohle oder vergastes Öl vorgesehen sein. Dazu ist die Brennkammer 6 der Gasturbine 2 eingangsseitig über eine Brennstoffleitung 130 an eine Vergasungseinrichtung 132 angeschlossen. Der Vergasungseinrichtung 132 ist über ein Eintragssystem 134 Kohle oder Öl als fossiler Brennstoff B zuführbar.

Zur Bereitstellung des für die Vergasung des fossilen Brennstoffs B benötigten Sauerstoffs O₂ ist der Vergasungseinrichtung 132 über eine Sauerstoffleitung 136 eine Luftzerlegungsanlage 138 vorgeschaltet. Die Luftzerlegungsanlage 138 ist eingangsseitig mit einem Teilstrom T der im Luftverdichter 4 verdichteten Luft beaufschlagbar. Dazu ist die Luftzerlegungsanlage 138 eingangsseitig an eine Entnahmeluftleitung 140 angeschlossen, die an einer Zweigstelle 142 von der Druckluftleitung 8 abzweigt. In die Entnahmeluftleitung 140 mündet zudem eine weitere Luftleitung 143, in die ein zusätzlicher Luftverdichter 144 geschaltet ist. Im Ausführungsbeispiel setzt sich somit der der Luftzerlegungsanlage 138 zuströmende gesamte Luftstrom L zusammen aus dem von der Druckluftleitung 8 abgezweigten Teilstrom T und aus dem vom zusätzlichen Luftverdichter 144 geförderten Luftstrom. Ein derartiges Schaltungskonzept wird auch als teilintegriertes Anlagenkonzept bezeichnet. In einer alternativen Ausgestaltung, dem sogenannten vollintegrierten Anlagenkonzept, kann die weitere Luftleitung 143 mitsamt dem zusätzlichen Luftverdichter 144 auch entfallen, so daß die Bespeisung der Luftzerlegungsanlage 138 mit Luft vollständig über den der Druckluftleitung 8 entnommenen Teilstrom T erfolgt.

Der in der Luftzerlegungsanlage 138 bei der Zerlegung des - Luftstroms L zusätzlich zum Sauerstoff O₂ gewonnene Stickstoff N₂ wird über eine an die Luftzerlegungsanlage 138 angeschlossene Stickstoffleitung 145 einer Mischvorrichtung 146 zugeführt und dort dem Synthesegas SG zugemischt. Die Mischvorrichtung 146 ist dabei für eine besonders gleichförmige und strähnenfreie Vermischung des Stickstoffs N₂ mit dem Synthesegas SG ausgebildet.

Das von der Vergasungseinrichtung 132 abströmende Synthesegas SG gelangt über die Brennstoffleitung 130 zunächst in einen Rohgas-Abhitzedampferzeuger 147, in dem durch Wärmetausch mit einem Strömungsmedium eine Abkühlung des Synthesegases SG erfolgt. Bei diesem Wärmetausch erzeugter Hochdruckdampf wird in nicht näher dargestellter Weise der Hochdruckstufe 50 des Wasser-Dampf-Kreislaufs 24 zugeführt.

In Strömungsrichtung des Synthesegases SG gesehen hinter dem Rohgas-Abhitzedampferzeuger 147 und vor der Mischvorrichtung 146 sind in die Brennstoffleitung 130 eine Entstaubungseinrichtung 148 für das Synthesegas SG sowie eine Entschwefelungsanlage 149 geschaltet. In alternativer Ausgestaltung kann anstelle der Enstaubungseinrichtung 148, insbesondere bei Vergasung von Öl als Brennstoff, auch eine Rußwäschevorrichtung vorgesehen sein.

Für einen besonders geringen Schadstoffausstoß bei der Verbrennung des vergasten Brennstoffs in der Brennkammer 6 ist eine Beladung des vergasten Brennstoffs mit Wasserdampf vor Eintritt in die Brennkammer 6 vorgesehen. Diese kann in wärmetechnisch besonders vorteilhafter Weise in einem Sättigersystem erfolgen. Dazu ist in die Brennstoffleitung 130 ein Sättiger 150 geschaltet, in dem der vergaste Brennstoff im Gegenstrom zu aufgeheiztem Sättigerwasser geführt ist. Das Sättigerwasser zirkuliert dabei in einem an den Sättiger 150 angeschlossenen Sättigerkreislauf 152, in den eine Umwälzpumpe 154 sowie zur Vorheizung des Sättigerwassers ein Wärmetauscher 156 geschaltet sind. Der Wärmetauscher 156 ist dabei primärseitig mit vorgewärmtem Speisewasser aus der Mitteldruckstufe 90 des Wasser-Dampf-Kreislaufs 24 beaufschlagt. Zum Ausgleich der bei der Sättigung des vergasten Brennstoffs auftretenden Verluste an Sättigerwasser ist an den Sättigerkreislauf 152 eine Einspeiseleitung 158 angeschlossen.

In Strömungsrichtung des Synthesegases SG gesehen hinter dem Sättiger 150 ist in die Brennstoffleitung 130 sekundärseitig ein als Rohgas-Mischgas-Wärmetauscher wirkender Wärmetauscher 159 geschaltet. Der Wärmetauscher 159 ist dabei primärseitig an einer Stelle vor der Entstaubungsanlage 148 ebenfalls in die Brennstoffleitung 130 geschaltet, so daß das der Entstaubungsanlage 148 zuströmende Synthesegas SG einen Teil seiner Wärme auf das aus dem Sättiger 150 abströmende Synthesegas SG überträgt. Die Führung des Synthesegases SG über den Wärmetauscher 159 vor Eintritt in die Entschwefelungsanlage 149 kann dabei auch bei einem hinsichtlich der anderen Komponenten abgeänderten Schaltungskonzept vorgesehen sein. Insbesondere bei Einschaltung einer Rußwäscheeinrichtung kann der Wärmetauscher bevorzugt rohgasseitig stromab der Rußwäscheeinrichtung angeordnet sein.

Zwischen den Sättiger 150 und den Wärmetauscher 159 ist in die Brennstoffleitung 130 sekundärseitig ein weiterer Wärmetauscher 160 geschaltet, der primärseitig speisewasserbeheizt oder auch dampfbeheizt sein kann. Durch den als Rohgas-Reingas-Wärmetauscher ausgebildeten Wärmetauscher 159 und den Wärmetauscher 160 ist dabei eine besonders zuverlässige Vorwärmung des der Brennkammer 6 der Gasturbine 2 zuströmenden Synthesegases SG auch bei verschiedenen Betriebszuständen der Gas- und Dampturbinenanlage 1 gewährleistet.

Zur bedarfsweisen Beaufschlagung des der Brennkammer 6 zuströmenden Synthesegases SG mit Dampf ist in die Brennstoffleitung 130 zudem eine weitere Mischvorrichtung 161 geschaltet, der Mitteldruck-Dampf über eine nicht näher dargestellte Dampfleitung zuführbar ist, insbesondere zur Sicherung eines zuverlässigen Gasturbinenbetriebs bei betrieblichen Störfällen.

Zur Kühlung des der Luftzerlegungsanlage 138 zuzuführenden, auch als Entnahmeluft bezeichneten Teilstroms T verdichteter Luft ist in die Entnahmeluftleitung 140 primärseitig ein Wärmetauscher 162 geschaltet, der sekundärseitig als Mitteldruckverdampfer für ein Strömungsmedium S' ausgebildet ist. Der Wärmetauscher 162 ist zur Bildung eines Verdampferumlaufs 163 mit einer als Mitteldrucktrommel ausgebildeten Wasser-Dampf-Trommel 164 verbunden. Die Wasser-Dampf-Trommel 164 ist über Leitungen 166, 168 mit der dem Wasser-Dampf-Umlauf 100 zugeordneten Mitteldrucktrommel 96 verbunden. Alternativ kann der Wärmetauscher 162 sekundärseitig aber auch direkt an die Mitteldrucktrommel 96 angeschlossen sein. Im Ausführungsbeispiel ist die Wasser-Dampf-Trommel 164 also mittelbar an die als Mitteldruckverdampfer ausgebildete Heizfläche 98 angeschlossen. Zur Nachspeisung von verdampftem Strömungsmedium S' ist an die Wasser-Dampf-Trommel 164 zudem eine Speisewasserleitung 170 angeschlossen.

In Strömungsrichtung des Teilstroms T verdichteter Luft gesehen nach dem Wärmetauscher 162 ist in die Entnahmeluftleitung 140 ein weiterer Wärmetauscher 172 geschaltet, der sekundärseitig als Niederdruckverdampfer für ein Strömungsmedium S'' ausgebildet ist. Der Wärmetauscher 172 ist dabei zur Bildung eines Verdampferumlaufs 174 an eine als Niederdrucktrommel ausgebildete Wasser-Dampf-Trommel 176 angeschlossen. Im Ausführungsbeispiel ist die Wasser-Dampf-Trommel 176 über Leitungen 178, 180 an die dem Wasser-Dampf-Umlauf 126 zugeordnete Niederdrucktrommel 122 angeschlossen und somit mittelbar mit der als Niederdruckverdampfer ausgebildeten Heizfläche 124 verbunden. Alternativ kann die Wasser-Dampf-Trommel 176 aber auch in anderer geeigneter Weise geschaltet sein, wobei der Wasser-Dampf-Trommel 176 entnommener Dampf einem Nebenverbraucher als Prozeßdampf und/oder als Heizdampf zuführbar ist. In weiterer alternativer Ausgestaltung kann der Wärmetauscher 172 sekundärseitig auch direkt an die Niederdrucktrommel 122 angeschlossen sein. Die Wasser-Dampf-Trommel 176 ist zudem an eine Speisewasserleitung 182 angeschlossen.

Die Verdampferumläufe 163, 174 können jeweils als Zwangumlauf ausgebildet sein, wobei der Umlauf des Strömungsmedium S' bzw. S'' durch eine Umwälzpumpe gewährleistet ist, und wobei das Strömungsmedium S', S'' im als Verdampfer ausgebildeten Wärmetauscher 162 bzw. 172 mindestens teilweise verdampft. Im Ausführungsbeispiel sind jedoch sowohl der Verdampferumlauf 163 als auch der Verdampferumlauf 174 jeweils als Naturumlauf ausgebildet, wobei der Umlauf des Strömungsmediums S' bzw. S " durch die sich beim Verdampfungsprozeß einstellenden Druckdifferenzen und/oder durch die geodätische Anordnung des jeweiligen Wärmetauschers 162 bzw. 172 und der jeweiligen Wasser-Dampf-Trommel 164 bzw. 176 gewährleistet ist. Bei dieser Ausgestaltung ist in den Verdampferumlauf 163 bzw. in den Verdampferumlauf 174 jeweils lediglich eine (nicht dargestellte) vergleichsweise gering dimensionierte Umwälzpumpe zum Anfahren des Systems geschaltet.

Zur Wärmeeinkopplung in den Sättigerkreislauf 152 ist zusätzlich zum Wärmetauscher 156, der mit aufgeheiztem, nach dem Speisewasservorwärmer 86 abgezweigtem Speisewasser beaufschlagbar ist, ein Sättigerwasser-Wärmetauscher 184 vorgesehen, der primärseitig mit Speisewasser S aus dem Speisewasserbehälter 46 beaufschlagbar ist. Dazu ist der Sättigerwasser-Wärmetauscher 184 primärseitig eingangsseitig über eine Leitung 186 an die Zweigleitung 84 und ausgangsseitig über eine Leitung 188 an den Speisewasserbehälter 46 angeschlossen. Zur Wiederaufheizung des aus dem Sättigerwasser-Wärmetauscher 184 abströmenden gekühlten Speisewassers S ist in die Leitung 188 ein zusätzlicher Wärmetauscher 190 geschaltet, der primärseitig dem Wärmetauscher 172 in der Entnahmeluftleitung 140 nachgeschaltet ist. Durch eine derartige Anordnung ist eine besonders hohe Wärmerückgewinnung aus der Entnahmeluft und somit ein besonders hoher Wirkungsgrad der Gas- und Dampfturbinenanlage 1 erreichbar.

In Strömungsrichtung des Teilstroms T gesehen zwischen dem Wärmetauscher 172 und dem Wärmetauscher 190 zweigt von der Entnahmeluftleitung 140 eine Kühlluftleitung 192 ab, über die der Gasturbine 2 eine Teilmenge T' des gekühlten Teilstroms T als Kühlluft zur Schaufelkühlung zuführbar ist.

Durch die Anordnung der Mischvorrichtung 146 brennstoffseitig vor dem Sättiger 150 ist im Wärmetauscher 159 eine besonders günstige Wärmeübertragung von dem dem Sättiger 150 zuströmenden, auch als Rohgas bezeichneten Synthesegas SG auf das aus dem Sättiger 150 abströmende, auch als Mischgas bezeichnete Synthesegas SG ermöglicht. Der Wärmetausch ist dabei insbesondere dadurch begünstigt, daß der Wärmetauscher 159 die Wärme aus dem Rohgas auf einen besonders großen Massenstrom des Mischgases überträgt. Somit ist auch bei begrenzter Endtemperatur eine vergleichsweise hohe Wärmemenge auf das aus dem Sättiger 150 abströmende Mischgas übertragbar. Die Gasund Dampfturbinenanlage 1 weist somit einen besonders hohen Anlagenwirkungsgrad auf.

## Patentansprüche

1. Gas- und Dampfturbinenanlage (1) mit einem einer Gasturbine (2) rauchgasseitig nachgeschalteten Abhitzedampferzeuger (30), dessen Heizflächen in den Wasser-Dampf-Kreislauf (24) einer Dampfturbine (20) geschaltet sind, und mit einer der Brennkammer (6) der Gasturbine (2) über eine Brennstoffleitung (130) vorgeschalteten Vergasungseinrichtung (132) für Brennstoff (B),
**dadurch gekennzeichnet, daß** in die Brennstoffleitung (130) zwischen der Vergasungseinrichtung (132) und einem Sättiger (150) zusätzlich zu einer Mischvorrichtung (146) zur Zumischung von Stickstoff (N2) ein Wärmetauscher (159) primärseitig geschaltet ist, der sekundärseitig zwischen dem Sättiger (150) und der Brennkammer (6) ebenfalls in die Brennstoffleitung (130) geschaltet ist.

2. Gas- und Dampfturbinenanlage (1) nach Anspruch 1,
**dadurch gekennzeichnet, daß** dem Wärmetauscher (159) in der Brennstoffleitung (130) vor dem Sättiger (150) ein Rohgas-Abhitzedampferzeuger (147) vorgeschaltet ist.

3. Gas- und Dampfturbinenanlage (1) nach Anspruch 1 oder 2,
**dadurch gekennzeichnet, daß** zwischen dem Sättiger (150) und der Brennkammer (6) ein weiterer Wärmetauscher (160) sekundärseitig in die Brennstoffleitung (130) geschaltet ist.

4. Gas- und Dampfturbinenanlage (1) nach Anspruch 3,
**dadurch gekennzeichnet, daß** der weitere Wärmetauscher (160) durch Speisewasser (S) beheizbar ist.

## Claims

1. Gas and steam turbine plant (1) with a waste-heat steam generator (30) which is located downstream of a gas turbine (2) on the flue-gas side and the heating surfaces of which are connected into the water/steam circuit (24) of a steam turbine (20), and with a fuel (B) gasification device (132) located upstream of the combustion chamber (6) of the gas turbine (2) via a fuel line (130), **characterized in that** a heat exchanger (159) is connected on the primary side into the fuel line (130) between the gasification device (132) and a saturator (150), in addition to a mixing device (146) for admixing nitrogen (N₂), said heat exchanger likewise being connected on the secondary side into the fuel line (130) between the saturator (150) and the combustion chamber (6).

2. Gas and steam turbine plant (1) according to Claim 1, **characterized in that** the heat exchanger (159) is preceded in the fuel line (130) by a crude-gas waste-heat steam generator (147) upstream of the saturator (150).

3. Gas and steam turbine plant (1) according to Claim 1 or 2, **characterized in that** a further heat exchanger (160) is connected on the secondary side into the fuel line (130) between the saturator (150) and the combustion chamber (6).

4. Gas and steam turbine plant (1) according to Claim 3, **characterized in that** the further heat exchanger (160) is capable of being heated by feedwater (S).

## Revendications

1. Installation (1) à turbine à gaz et à turbine à vapeur, comprenant un générateur (30) de vapeur à récupération de la chaleur perdue, qui est monté en aval du côté des gaz de fumée d'une turbine (2) à gaz, et dont des surfaces de chauffe sont montées dans le circuit (24) eau-vapeur d'une turbine (20) à vapeur et comprenant un dispositif (132) de gazéification de combustible (B), monté en amont de la chambre (6) de combustion de la turbine (2) à gaz par l'intermédiaire d'un conduit (130) pour du combustible,
**caractérisée en ce qu'**il est monté du côté primaire, dans le conduit (130) pour du combustible, entre le dispositif (132) de gazéification et un saturateur (150), en plus d'un dispositif (146) de mélange pour l'addition d'azote (N2), un échangeur de chaleur (159) qui est monté du côté secondaire entre le saturateur (150) et la chambre (6) de combustion, également dans le conduit (130) pour du combustible.

2. Installation (1) à turbine à gaz et à turbine à vapeur suivant la revendication 1, **caractérisée en ce qu'**il est monté en amont de l'échangeur de chaleur (159), dans le conduit (130) pour du combustible, devant le saturateur (150), un générateur (147) de vapeur à récupération de la chaleur perdue pour du gaz brut.

3. Installation (1) à turbine à gaz et à turbine à vapeur suivant la revendication 1 ou 2, **caractérisée en ce qu'**il est monté, entre le saturateur (150) et la chambre (6) de combustion, un autre échangeur de chaleur (160) du côté secondaire, dans le conduit (130) pour du combustible.

4. Installation (1 ) à turbine à gaz et à turbine à vapeur suivant la revendication 3, **caractérisée en ce que** l'autre échangeur de chaleur (160) peut être alimenté par de l'eau (S) d'alimentation.
